# EUROPEAN PATENT SPECIFICATION

(11) **EP 1 869 434 B1**
(45) Date of publication and mention of the grant of the patent: **11.07.2018**
(21) Application number: 05731824.8
(22) Date of filing: 01.04.2005
(51) Int. Cl.: G01N 21/67, F16G 5/16

(54) **QUALITY MONITORING METHOD IN A PUSH BELT MANUFACTURING PROCESS**
QUALITÄTSKONTROLLMETHODE BEI SCHUBRIEMENHERSTELLUNGSVERFAHREN
PROCEDE DE SURVEILLANCE DE QUALITE DANS UN PROCEDE DE FABRICATION DE COURROIE DE POUSSEE

(43) Date of publication of application: 26.12.2007
(73) Proprietor: ROBERT BOSCH GMBH, 70442 Stuttgart (DE)
(72) Inventor: KUIJPERS, Niels, Cees, Willem, NL-5056 SL Berkel-Enschot (NL)
(74) Representative: Plevier, Gabriel Anton Johan Maria
(86) International application number: PCT/NL2005/000250
(87) International publication number: WO 2006/104375

(56) References cited:
- EP-A- 1 055 738
- EP-A- 1 176 224
- R.K. MARCUS (EDITOR) AND J.A.C BOREKAERT(EDITOR): "Glow Discharge Plasmas in Analytical Spectroscopy" 2003, JOHN WILEY & SONS , XP002354818 ISBN: 0-471-60699-5 see chapter Surfaces, Thin Films and Coatings by R. Payling et al. page 231 - page 252
- HIRSCH T ET AL: "Characterization of TiCN coatings deposited by magnetron sputter-ion plating process: RBS and GDOS complementary analyses" NUCLEAR INSTRUMENTS & METHODS IN PHYSICS RESEARCH, SECTION - B: BEAM INTERACTIONS WITH MATERIALS AND ATOMS, ELSEVIER, AMSTERDAM, NL, vol. 136-138, March 1998 (1998-03), pages 788-792, XP004140428 ISSN: 0168-583X
- PAYLING R: "GLOW DISCHARGE OPTICAL EMISSION SPECTROMETRY" MATERIALS FORUM, PERGAMON PRESS, OXFORD, GB, vol. 18, 1994, pages 195-213, XP000984341 ISSN: 0160-7952

## Description

The present invention relates to a method for monitoring the quality of a push belt manufacturing process, in particular of a ring component thereof. Such a push belt is predominantly used as the means for power transmission between two adjustable pulleys of the well-known continuously variable transmission that is mainly applied in motor vehicles.

The push belt is generally known and is composed of a multitude of relatively thin transverse metal elements that are slideably incorporated on one or more laminated endless tensile means that are each composed of a set of mutually nested flat metal rings, alternatively denoted bands. Such rings are normally made from a Maraging steel, that combines a/o the properties of great tensile strength and good resistance against tensile stress and bending fatigue with a relatively favourable possibility to process the steel from sheet material towards the desired shape and material characteristics of the end-product rings, which, preferably, should not vary along the circumference of the rings.

These desired material characteristics comprise a fair hardness of the ring core material for combining the properties of a great tensile strength together with sufficient elasticity to allow longitudinal bending of the ring and an extremely hard outer surface layer of the ring to provide wear resistance. Preferably, the outer surface layer is also provided with an residual compressive stress to provide a high resistance against metal fatigue, which is a significant feature of the rings because of the numerous number of load and bending cycles the rings are subjected to during the service lifetime of the belt.

The process steps of the general manufacturing method for such belts, at least for the metal ring component thereof, as applied by Applicant for several decades now, have become well known in the art. The rings themselves are formed out of a sheet base material, which is bent and welded into a cylindrical shape, or tube, which is heat treated, i.e. annealed, to restore the original material properties, i.e. to largely remove changes therein that were introduced by the bending and welding. The tube is than cut into a number of hoops, which are subsequently rolled and elongated to a required thickness, which is typically about 0.185 mm in the end product. After rolling, the hoops are usually referred to as rings or bands. The rings are subjected to a further annealing step to remove the internal stresses introduced during rolling. Thereafter, the rings are calibrated, i.e. they are mounted around two rotating rollers and stretched to a predefined circumference length. In this process step, also an internal stress distribution is imposed on the rings, which a/o defines the so-called curling radius of the ring as is explained in detail in the European patent application EP-A-1 403 551. Finally, the rings are precipitation hardened, i.e. aged, at elevated temperature in a nitrogen-atmosphere and subsequently or simultaneously gas nitrided at elevated temperature in an atmosphere containing a defined concentration of ammonia to provide additional hardness, as well as a compressive stress to the outer surface layer of the rings, which latter process step is alternatively denoted "case hardening". From a number of these processed rings a tensile means is formed by radially nesting, i.e. placing essentially concentrically, a number of purposely selected rings, whereby only a small positive or negative play is allowed between adjacent rings of the tensile means.

A vital process step in the above-explained general processing of the push belt ring component is the nitriding process to obtain a hard surface layer, since nitrided surfaces have a significant higher wear and fatigue resistance than non nitrided surfaces. On the other hand the thickness of the hardened surface layer is not unlimited, because otherwise the rings may become too brittle and/or production cost may become needlessly high. Thus, by the ring manufacturing process a desired, i.e. optimum lifetime of the push belt may be realised.

Because of the importance of the nitrided surface layer of the rings to the quality of the push belt end product, it is important to at least sustain a constant and preferably optimum nitride layer thickness during the production process of the push belt ring component. Therefore, it is generally considered essential to monitor the quality of the produced rings, at least by measuring the thickness of the nitrided surface layer of production samples. When such thickness of a specific sample ring deviates from a pre-defined norm therefor, a relevant batch of rings may be rejected for belt assembly and/or the process settings of the nitriding process may be fine-tuned to realise a desired nitride layer thickness.

The conventional method for monitoring the thickness of the nitrided surface has been to sample the production process by picking ring samples from the production process flow at certain time or quantity intervals, by cutting such a ring, polishing the cut surface and, finally, etching the polished surface with a specially provided etching liquid composition. By this conventional method, the nitride surface layer is made visible relative to the core material of the ring and its thickness can be measured, e.g. using a microscope. Although Applicant has used this known method for many years with satisfying results, it is, however, considered labour intensive and time consuming. Moreover, although the method is perfectly suited for comparing the measured nitride layer thickness with the pre-defined norm, it does not provide a well defined characterisation of the nitride layer itself, e.g. in terms of its absolute thickness or of the Nitrogen concentration in the Maraging steel matrix.

Relevant prior art can be found in Hirsch et al. "Characterization of TiCN coatings deposited by magnetron sputter-ion plating process: RBS and GDOS complementary analyses", NUCLEAR INSTRUMENTS & METHODS IN PHYSICS RESEARCH B 136-138 (1998) 788-792 and EP1176224. It is an object of the present invention to provide for a new method for measuring the thickness of the nitrided surface layer of the push belt ring component to be used as a method of monitoring the quality thereof, according to claim 1. More in particular it is aimed to provide for a method that is less labour intensive and time consuming in comparison with the conventional method.

According to the present invention such a new method for measuring the thickness of the nitrided surface layer in a push belt ring component is provided by the following claim 1. The main improvements of this new method are a considerable decrease in the labour and time capacity required to perform a measurement, as well as the information content and accuracy thereof provided by such measurement.

The technique of Glow Discharge Optical Emission Spectroscopy (GDOES) is a well known technique in the field of direct composition analysis of bulk solids, as well as of depth profiling of thin film and industrial coating compositions. According to the present invention, however, it may also be applied in the present technical field of determining the thickness of a nitride layer in a push belt ring component. According to the invention, the GDOES-technique was in this respect surprisingly found to be also suitable for accurately measuring a Nitrogen concentration within the Maraging steel matrix of the ring in relation to a sample depth relative to the external ring surface. It is this depth versus measured Nitrogen concentration characteristic from which the thickness of the nitrided surface layer is determined in accordance with the present invention.

In a GDOES-measurement atoms are sputtered away from the sample surface. This results in the formation of a crater having a diameter of a few millimetres, depending of the shape of a sputtering probe, and a depth of a few tenths of micrometers. In this process a powerful electric field is generated between the probe (anode) and the metallic sample (cathode) and the sputtering is realised by an electric discharge in a low-pressure argon gas plasma atmosphere. Hereby atoms are continuously being sputtered (eroded) from the sample's surface by the bombardment of inert gas (e.g. Argon) ions of the discharge plasma. The sputtered atoms are subsequently excited or ionised in the negative glow of the plasma mainly by collisions with electrons, emitting energy in the form of characteristic light emission, which is analysed by a spectrometer that measures the intensity of the light emitted in specific wavelengths associated with the elements of interest, here Nitrogen. In order to be able to correctly and accurately link the measured light intensity to the actual Nitrogen concentration, as well as the electric sputtering current and process time to the actual sample depth, the GDOES-measurement apparatus is pre-calibrated, which calibration process is preferably repeated regularly to correct for any drift. Alternatively, the gradual increase of the actual sample depth during a measurement could be related to a measured amount (aggregate of the concentrations measured over time) of an element or elements of the steel that are evenly distributed in the bulk material.

The invention further relates to a number of further developments of the GDOES-technique in relation to the present new application thereof, which will be elucidated with reference to the figures enclosed.
Figure 1 is a schematic representation in a perspective view of a known continuously variable transmission provided with a push-type driving belt and two pulleys.
Figure 2 is a cross section of the known push belt oriented in the longitudinal direction thereof.
Figure 3 figuratively represents the process steps of the known manufacturing method for creating metal rings to be applied in the push belt.
Figure 4 schematically represents a macroscopic view of a cross section of one ring of the laminated tensile means including an indication of a case hardened surface layer thereof and of a measurement pit.
Figure 5 shows a schematic graph of a measured nitride concentration characteristic of such ring.

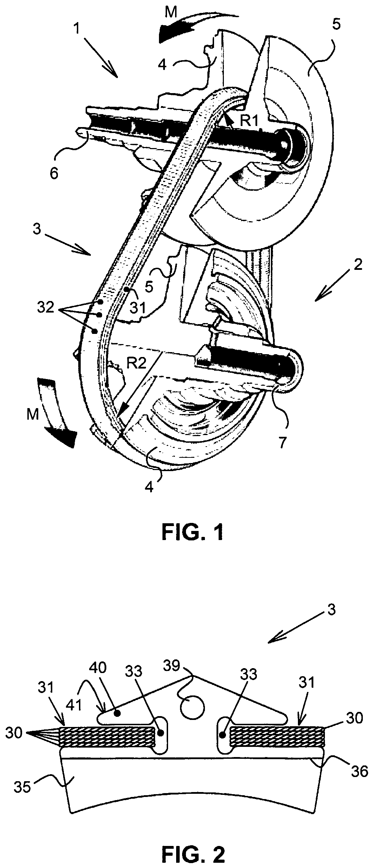

Figure 1 shows the central parts of a known continuously variable transmission that is commonly applied in the drive-line of motor vehicles between the engine and the drive wheels thereof. The transmission comprises two pulleys 1, 2, each provided with two pulley discs 4, 5, between which a push-type driving belt 3 is present for transmitting a rotational movement M and an accompanying torque from one pulley 1, 2 to the other 2, 1. The pulley discs 4, 5 are shaped generally conical and at least one pulley disc 4 is incorporated in the transmission axially moveable along a respective pulley shaft 6, 7 on which both discs 4, 5 are placed. The transmission normally also comprises activation means that impose on the said at least one movable disc 4 an axially oriented clamping force directed towards the respective other pulley disc 5 such that the push belt 3 is clamped there between.

The push belt 3 comprises an endless tensile means 31 and a multitude of relatively thin transverse elements 32 that are provided on the tensile means 31 movable along the longitudinal direction thereof and oriented predominantly transversely thereto. The elements 32 take-up the said clamping force, such that at rotation of a driving pulley 1, friction between the discs 4, 5 and the push belt 3, causes the elements 32 to be thrust in the said direction of movement M from the said driving pulley 1 to a driven pulley 2 and back again, thereby being guided and supported by the tensile means 31. A geometric transmission ratio of the transmission is determined by the quotient of an effective contact radius R2 of the push belt 3 at the driven pulley 2 and an effective contact radius R1 of the push belt 3 at the driving pulley 1, which may be varied continuously in range of values.

Figure 2 provides a cross section of the known push belt, which cross section is oriented in the longitudinal direction of the belt 3. In figure 2 the transverse element component 32 of the push belt 3 is shown in front elevation. The element 32 is incorporated in the push belt 3 mounted on the endless tensile means 31 thereof, which, at least in this example, consists of two laminated parts, each part being formed by a number of thin and flat metal rings 30 that are nested one around the other in the radial direction and each part being accommodated in a respective opening 33 of the transverse element 32. Further, a projection 39 is provided on a front main face 40 of the transverse element 32, which projection 39 is accommodated in a hole (not visible) provided in a rear main face 41 of an adjacent transverse element 32. The projection 39 and hole are provided to mutually connect and align adjacent transverse elements 32 of the push belt 3 during operation in the transmission. An underside 35 of the transverse elements 32 below a so-called tilting edge 36 is wedge-shaped, so as to allow adjacent elements 32 to mutually tilt about the axial direction when clamped between the discs 4, 5 of the pulleys 1, 2.

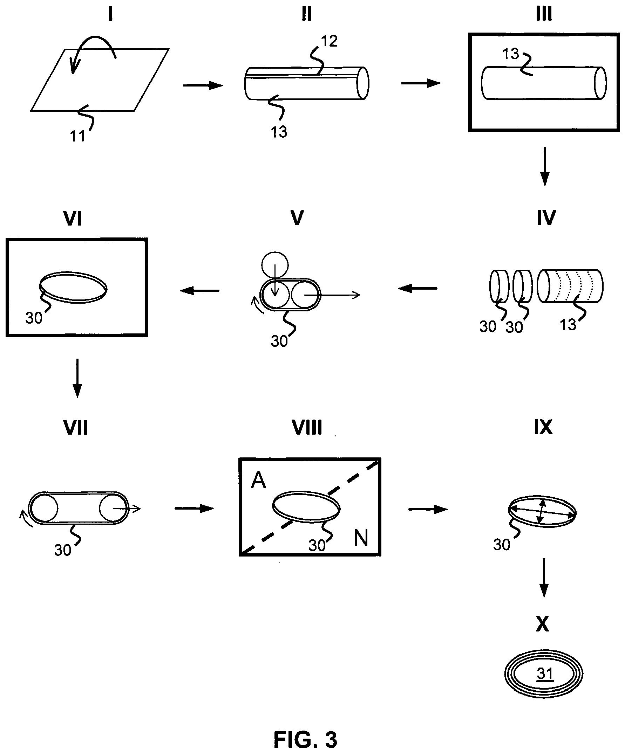

Figure 3 illustrates the presently relevant part of the known manufacturing method for the above described push belt 3, which part concerns the manufacturing of its ring component 30. In a first process step I a sheet of base material 11 is bent into a cylindrical shape, whereby the sheet ends 12 that meet each other are welded together in a second process step II to form a tube 3. In a third step III of the process the tube 13 is annealed. Thereafter, in a fourth process step IV the tube 13 is cut into a number of hoops 30, which are subsequently -process step five V- rolled and elongated to a required thickness, which is typically about 0.185 mm in the end product. After rolling the hoops 30 are usually referred to as rings 30 or bands 30.

The rings 30 are subjected to a further annealing process step VI to remove the internal stresses introduced during rolling. Thereafter, in a seventh process step VII, the rings 30 are calibrated, i.e. they are mounted around two rotating rollers and stretched to a predefined circumference length. In this seventh process step VII, also an internal stress distribution is imposed on the rings 30, which defines the so-called curling radius of the respective ring 30. In the eighth step VIII of the known process the rings 30 undergo two heat treatments VIII-A and VIII-N, either subsequently or simultaneously. Firstly, the rings 30 are precipitation hardened, i.e. aged, (indicated by the letter "A") and, secondly, the rings 30 are nitrided (indicated by the letter "N"), to provide additional hardness, as well as a compressive stress to the outer surface layer of the rings 30. This latter heat treatment VIII-N is known as a gas soft nitriding process and provides a case hardening of the rings 30, whereby a diffusion nitrided surface layer of typically 25-35 microns of extreme hardness is formed.

From a number of such processed rings 30 the tensile means 31 is formed by radially stacking, i.e. nesting, a number of purposely selected rings 30, as is further indicated in figure 3. To obtain the required number of rings 30 suited for forming one tensile means 31, a representative dimension of each processed ring 30, e.g. its circumference length, is measured in a ninth process step IX, whereby the rings 30 are stocked classified by such length. Subsequently, in a tenth and final process step X the endless tensile means 31 is assembled by radially nesting a number of suitably dimensioned rings 30 from such stock of classified rings 30.

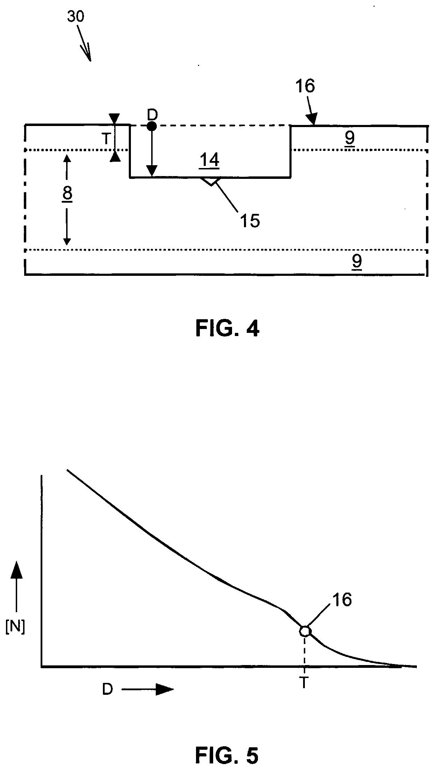

Figure 4 schematically represents a detailed cross section of a ring 30, i.e. taken transverse to the longitudinal or endless direction of the belt 1. From the figure it may be taken that a ring 30 after being treated as described above, shows an outer surface layer or case 9 that is characterised by an increased hardness relative to that of the ring core material 8. The increased hardness is achieved by the incorporation of Nitrogen atoms in the Maraging steel matrix in the process step of nitriding VIII-N. Because of the importance of the nitrided surface layer 9 of the rings 30 to the quality of the push belt 3 end product, it is important to at least sustain a constant and preferably optimum nitride layer thickness T in the production process of push belt ring components 30. Therefore, it is generally considered essential to monitor the quality of the produced rings 30, at least by measuring the thickness T of the nitrided surface layer 9 of production samples.

The present invention provides for a new and favourable method for measuring the thickness T of the nitrided surface layer 9 of the push belt ring component 30 to be used as a method of monitoring the quality thereof. This method departs from a technique called glow discharge optical emission spectroscopy (GDOES). With the GDOES-technique a Nitrogen concentration [N] concentration is measured in the Maraging steel matrix of the ring material in relation to a sample depth D relative to an external ring surface 16 by evaporating ring material in a controlled manner, such that gradually a small pit or "crater" 14 is formed in the ring surface 16, and by continuously measuring the Nitrogen concentration [N] in the vapour released from the crater 14.

An example of a sample depth D versus measured Nitrogen concentration [N] characteristic is shown in figure 5. In accordance with the present invention the thickness T of the nitrided surface layer 9 may be readily derived from such curve, because the nitride concentration [N] decreases with depth D. The end of the nitride layer 9 is indicated by a relatively rapid decrease in nitride concentration [N].

In a preferred embodiment of the method according to the invention, the nitride layer thickness T is defined by the point of inflection 16 of the measured curve, an example of which is provided in figure 5. At such point of inflection the second mathematical derivative of the curve equals zero. In accordance with the invention it was found that such a definition and measuring method for determining the thickness T of the nitrided surface layer 9 of the ring 30 provides optimal results, in particular in terms of accuracy and reproducibility thereof.

Like the nitride layer thickness T, also the hardness of the ring core material 8 of the rings 30, i.e. beyond the nitrided surface layer 9, is an important parameter for the quality of the push belt end product and thus needs to be monitored in the production process of push belt ring components 30. In another preferred embodiment of a method not being part of the present invention, a hardness measurement is favourable performed, e.g. by a well-known Vickers hardness indentation, at the bottom of the crater 14 after it has been formed, which is schematically indicated in figure 5 by the notch 15. Hereby, it is made use of the feature that the crater 14 penetrates through the nitrided surface layer 9 into the ring core 8, which thus need not be exposed especially for the purpose of the core hardness measurement as is presently the case.

To this end, the ring sample 30 is water-cooled during the crater 14 formation in order to retain a low temperature of the sample and not to influence the core hardness value. Experiment confirmed that in this manner it could, indeed, be achieved that the heat generated by the GDOES-measurement does not notionally influence the hardness of the ring core material 8 inside the crater 14.

## Claims

1. Method for monitoring the quality of a process for the manufacture of a ring component (30) for a push belt (3) for a continuously variable transmission by measuring a thickness (T) of a nitrided surface layer (9) of the ring component (30), which push belt (3) is composed of a multitude of relatively thin transverse metal elements (32) that are slideably incorporated on one or more laminated endless tensile means (31) that are each composed of a set of mutually nested flat metal rings (30), **characterised in that** a small pit (14) is formed in the ring (30) by evaporating ring material using GDOES-technique, **in that** a Nitrogen concentration ([N]) in the evaporated material is measured in relation to a depth (D) of the pit (14) relative to the external surface (16) of the ring (30) and **in that** the depth (D) of the pit (14) at the point of inflection (16) of a curve representing the measured relation between the Nitrogen concentration ([N]) and the depth (D) of the pit (14) provides the thickness (T) of the nitrided surface layer (9).

2. Method according to claim 1, **characterised in that** the ring material is evaporated by means of glow discharge, the evaporated atoms are subsequently excited or ionised in a discharge plasma thereby emitting light and that the Nitrogen concentration ([N]) is measured concentration by means of optical emission spectroscopy of the emitted light.

3. Method according to claim 1 or 2, **characterised in that** at least in the immediate vicinity of the pit (14) the ring (30) is (water-) cooled.

4. Method according to claim 1, 2 or 3, **characterised in that** it is monitored whether the determined thickness (T) of the nitrided surface layer (9) is inside or outside pre-defined normal range therefor, and **in that**, if the thickness (T) is outside the said range, a relevant batch of rings (30) is rejected for the assembly of the drive belt (3) or a process setting of a ring nitriding process (VIII-N) is modified.

5. Method according to any one of the preceding claims, **characterised in that** a hardness measurement is performed at the bottom of the pit (14).

6. Method according to any one of the preceding claims, **characterised in that** the depth (D) of the pit (14) is related to an aggregate amount of the concentration measured over time in the evaporated material of an element of the bulk material of the ring (30) that is evenly distributed therein.

## Patentansprüche

1. Methode zur Kontrolle der Qualität eines Verfahrens zur Herstellung einer Ringkomponente (30) für einen Schubriemen (3) für ein stufenloses Getriebe durch Messen einer Dicke (T) einer nitrierten Oberflächenschicht (9) der Ringkomponente (30), wobei der Schubriemen (3) aus einer Vielzahl von relativ dünnen Quermetallelementen (32) besteht, die verschiebbar an einem oder mehreren laminierten Endloszugmitteln (31) enthalten sind, welche jeweils aus einem Satz ineinander verschachtelter flacher Metallringe (30) bestehen, **dadurch gekennzeichnet, dass** durch Verdampfen von Ringmaterial unter Verwendung einer GDOES-Technik eine kleine Vertiefung (14) in dem Ring (30) ausgebildet wird, eine Stickstoffkonzentration (N) in dem verdampften Material in Bezug auf eine Tiefe (D) der Vertiefung (14) bezüglich der Außenfläche (16) des Rings (30) gemessen wird und dass die Tiefe (D) der Vertiefung (14) am Wendepunkt (16) einer die gemessene Beziehung zwischen der Stickstoffkonzentration (N) und der Tiefe (D) der Vertiefung (14) darstellenden Kurve die Dicke (T) der nitrierten Oberflächenschicht (9) liefert.

2. Methode nach Anspruch 1, **dadurch gekennzeichnet, dass** das Ringmaterial mittels Glimmentladung verdampft wird, die verdampften Atome in einem Entladungsplasma anschließend erregt oder ionisiert werden, wodurch Licht emittiert wird, und dass die Stickstoffkonzentration (N) mittels optischer Emissionsspektroskopie des emittierten Lichts gemessen wird.

3. Methode nach Anspruch 1 oder 2, **dadurch gekennzeichnet, dass** der Ring (30) mindestens in unmittelbarer Umgebung der Vertiefung (14) (wasser-)gekühlt wird.

4. Methode nach Anspruch 1, 2 oder 3, **dadurch gekennzeichnet, dass** kontrolliert wird, ob sich die bestimmte Dicke (T) der nitrierten Oberflächenschicht (9) innerhalb oder außerhalb eines dafür definierten Normalbereichs befindet, und dass, wenn sich die Dicke (T) außerhalb des Bereichs befindet, eine betreffende Charge von Ringen (30) für die Montage des Antriebsriemens (3) verworfen wird oder eine Prozesseinstellung eines Ringnitrierprozesses (VIII-N) modifiziert wird.

5. Methode nach einem der vorhergehenden Ansprüche, **dadurch gekennzeichnet, dass** eine Härtemessung am Grund der Vertiefung (14) durchgeführt wird.

6. Methode nach einem der vorhergehenden Ansprüche, **dadurch gekennzeichnet, dass** die Tiefe (D) der Vertiefung (14) mit einer Gesamtsumme der über die Zeit gemessenen Konzentrationen in dem verdampften Material eines Elements des Grundmaterials des Rings (30), das gleichmäßig darin verteilt ist, in Beziehung steht.

## Revendications

1. Méthode de contrôle de la qualité d'un procédé de fabrication d'un composant annulaire (30) pour une courroie de poussée (3) pour une transmission à variation continue par mesure d'une épaisseur (T) d'une couche superficielle nitrurée (9) du composant annulaire (30), ladite courroie de poussée (3) étant composée d'une multitude d'éléments (32) métalliques transversaux relativement minces qui sont intégrés à coulissement sur un ou plusieurs moyens de tension (31) sans fin stratifiés qui sont chacun composés d'un ensemble d'anneaux (30) métalliques plats mutuellement imbriqués, **caractérisée en ce qu'**une petite cavité (14) est formée dans l'anneau (30) par évaporation de matière de l'anneau au moyen d'une technique de spectroscopie optique d'émission à décharge lumineuse, **en ce qu'**une concentration en azote ([N]) dans la matière évaporée est mesurée par rapport à une profondeur (D) de la cavité (14) vis-à-vis de la surface extérieure (16) de l'anneau (30) et **en ce que** la profondeur (D) de la cavité (14) au niveau du point d'inflexion (16) d'une courbe représentant la relation mesurée entre la concentration d'azote ([N]) et la profondeur (D) de la cavité (14) donne l'épaisseur (T) de la couche superficielle nitrurée (9).

2. Méthode selon la revendication 1, **caractérisée en ce que** la matière d'anneau est évaporée par décharge lumineuse, les atomes évaporés sont ensuite excités ou ionisés dans un plasma de décharge de sorte qu'ils émettent ainsi de la lumière et **en ce que** la concentration en azote ([N]) est la concentration mesurée par spectroscopie optique d'émission de la lumière émise.

3. Méthode selon la revendication 1 ou 2, **caractérisée en ce que**, au moins dans le voisinage immédiat de la cavité (14), l'anneau (30) est refroidi (à l'eau).

4. Méthode selon la revendication 1, 2 ou 3, **caractérisée en ce que** l'on contrôle si l'épaisseur (T) déterminée de la couche superficielle nitrurée (9) se situe au sein ou en dehors d'une plage normale prédéfinie pour celle-ci, et **en ce que**, si l'épaisseur (T) se situe en dehors de ladite plage, un lot correspondant d'anneaux (30) est rejeté pour l'assemblage de la courroie d'entraînement (3) ou un paramètre de procédé d'un procédé de nituration d'anneau (VIII-N) est modifié.

5. Méthode selon l'une quelconque des revendications précédentes, **caractérisée en ce qu'**une mesure de dureté est effectuée au niveau du fond de la cavité (14).

6. Méthode selon l'une quelconque des revendications précédentes, **caractérisée en ce que** la profondeur (D) de la cavité (14) est liée à une quantité totale de la concentration mesurée au fil du temps dans la matière évaporée d'un élément de la masse de l'anneau (30) qui y est distribué de manière uniforme.
